# EUROPÄISCHE PATENTSCHRIFT

(11) **EP 2 834 526 B1**
(45) Veröffentlichungstag und Bekanntmachung des Hinweises auf die Patenterteilung: **01.02.2017**
(21) Anmeldenummer: 12813050.7
(22) Anmeldetag: 28.12.2012
(51) Int. Cl.: F16B 5/00, F16B 5/01, F16B 5/06

(54) **LEICHTBAUPLATTE, VERBINDUNGSANORDNUNG UND VERFAHREN ZUM HERSTELLEN EINER VERBINDUNGSANORDNUNG**
LIGHTWEIGHT CONSTRUCTION PANEL, CONNECTING ARRANGEMENT AND METHOD FOR PRODUCING A CONNECTING ARRANGEMENT
PANNEAU DE CONSTRUCTION LÉGER, SYSTÈME D'ASSEMBLAGE ET PROCÉDÉ DE FABRICATION D'UN SYSTÈME D'ASSEMBLAGE

(30) Priorität: 04.04.2012 DE 102012006755; 02.05.2012 DE 102012008520
(43) Veröffentlichungstag der Anmeldung: 11.02.2015
(73) Patentinhaber: Fritz Egger GmbH & Co. OG, 6380 St. Johann in Tirol (AT)
(72) Erfinder: REITER, Bruno, A-6480 St. Johann in Tirol (AT); NERF, Helmut, 84577 Tüßling (DE)
(74) Vertreter: Cohausz & Florack
(86) Internationale Anmeldenummer: PCT/EP2012/077030
(87) Internationale Veröffentlichungsnummer: WO 2013/149689

(56) Entgegenhaltungen:
- EP-A2- 1 400 641
- WO-A2-2008/021044
- DE-A1-102007 007 832
- US-B1- 6 314 701

## Beschreibung

Die vorliegende Erfindung betrifft eine Leichtbauplatte mit einer sich in einer Längsrichtung erstreckenden oberen Decklage, mit einer sich parallel zur oberen Decklage erstreckenden unteren Decklage, die in einer Richtung senkrecht zur Längsrichtung von der oberen Decklage beabstandet ist, mit einer sich zwischen der oberen Decklage und der unteren Decklage erstreckenden leichten Mittellage und mit einem sich zwischen der oberen Decklage und der unteren Decklage erstreckenden Riegel aus Holz oder Holzwerkstoff, wobei der Riegel mit beiden Decklagen verbunden ist. Ferner betrifft die Erfindung eine Verbindungsanordnung mit einer solchen Leichtbauplatte und mit einem weiteren Bauteil. Schließlich betrifft die Erfindung ein Verfahren zum Herstellen einer solchen Verbindungsanordnung. Eine entsprechende Leichtbauplatte und Verbindungsanordnung und ein entsprechendes Herstellungsverfahren sind beispielsweise bekannt aus der DE 295 13 784 U1.

Leichtbauplatten sind aus dem Stand der Technik hinlänglich bekannt. Diese weisen eine obere und eine untere Decklage sowie eine dazwischen angeordnete leichte Mittellage, also eine Mittellage aus einem Material einer geringeren Dichte als die Decklagen, auf. Speziell im Möbel- und Innenausbau werden Leichtbauplatten seit langer Zeit in vielfältiger Weise verwendet.

Leichtbauplatten werden unter anderem im gehobenen Einrichtungsbereich, speziell im Möbelbau, eingesetzt, weil durch deren Einsatz sehr große Wandstärken realisiert werden können, die besondere gestalterische Möglichkeiten bieten. In jüngerer Zeit werden auch bei Massenmöbeln verstärkt Leichtbauplatten verwendet, so dass auch ein Einsatz auf breiterem Gebiet wirtschaftlich möglich wird. Damit sind die verschiedenen Vorzüge der Leichtbauplatten einer größeren Schicht von Endverbrauchern zugängig.

In zunehmendem Maß werden Leichtbauplatten auch industriell gefertigt. Dazu wird eine leichte Mittellage mit den Decklagen versehen, zumeist durch Klebung, so dass ein großformatiger Verbund entsteht. Je nach geforderter Stabilität der Platte werden unterschiedlich dicke Decklagen, zumeist aus einem Holzwerkstoff wie einer Span-, Faser oder OSB-Platte, eingesetzt. Die verwendeten Platten können bereits beschichtet sein, also etwa mit einem Laminat, einer Farbe, einem Druck mit Versiegelung, einer Melaminharzschicht, einem Furnier, etc. versehen sein. Als Mittellagen werden Kartonwaben oder Schaumstoffplatten aus expandiertem Kunststoff bevorzugt. Für bestimmte Verwendungszwecke sind möglicher Weise auch Wabenmaterialien aus anderen Materialien als Karton sinnvoll. So können dafür dünnste Plattenmaterialien oder auch dünnwandiges Metall, beispielsweise aus Aluminium eingesetzt werden. Es ist aber auch möglich als Mittellagen leichte Holzwerkstoffe wie etwa entsprechende Spanplatten oder Faserplatten oder auch Massivholz geringer Dichte, wie Balsaholz, einzusetzen. Mit entsprechenden Ausnehmungen/Hohlräumen versehen sind grundsätzlich alle Materialien zum Einsatz als leichte Mittellage möglich. So werden dafür beispielsweise auch Holzarten herangezogen, die zwar kein besonders geringes Gewicht aufweisen, dafür aber gut verfügbar sind und sich gut mit zerspanenden Werkzeugen bearbeiten lassen.

An einer oder mehreren Stirnseiten einer Leichtbauplatte können aus Stabilitätsgründen auch sogenannte Riegel zwischen die Decklagen eingesetzt werden, die üblicherweise aus einem Holzwerkstoff bestehen und relativ große Druckkräfte senkrecht zur Plattenebene aufnehmen können. Mehrere Riegel können untereinander auch zu einem Rahmen verbunden sein. Ein solcher Riegel hat in der Regel einen rechteckigen Querschnitt in einem Schnitt senkrecht zur Plattenebene und verläuft in der Regel über die gesamte Breite (Querriegel) bzw. über die gesamte Länge (Längsriegel) der Leichtbauplatte. Solche Riegel oder Rahmen verhindern, dass die leichte Mittellage, die häufig aus Kartonstegen besteht, bei hohen Druckbelastungen senkrecht zur Plattenebene Schaden nimmt.

Leichtbauplatten der zuvor beschriebenen Art und mit den beschriebenen Merkmalen sind auch Grundlage der vorliegenden Erfindung. Dies gilt insbesondere auch für die beschriebenen Materialien der Decklagen und der Mittellage.

Möbel werden sehr häufig aus Holzwerkstoffen wie den genannten Span- oder Faserplatten hergestellt. Die Verbindung der einzelnen Elemente bzw. Platten erfolgt dabei zumeist durch Schrauben, Dübel, diverse Korpusverbinder, Klebeverbindung oder Kombinationen davon.

Die im Stand der Technik üblicherweise verwendeten Verbindungen werden durch die beschriebenen Beschlagteile (Schrauben, Dübel, etc.) realisiert. Diese haben eine Reihe von Nachteilen: sie werfen erhebliche Kosten auf, es werden Werkzeuge zur Montage benötigt, der Endverbraucher benötigt bei der Eigenmontage eines Möbels in der Regel eine gewisse Übung, er verfügt nicht über optimale Werkzeuge oder geeignete Haltevorrichtungen, er muss Muskelkraft einsetzen und sich bei mehreren Möbeln daher körperlich stark anstrengen, wobei das Möbel leicht beschädigt werden kann oder sich der Endverbraucher bei der für ihn ungewohnten Tätigkeit verletzen kann. Ein weiteres Problem ist, dass oftmals Beschlagteile in dem Gebinde mit den Möbelteilen fehlen, wodurch der Endverbraucher gezwungen ist, beim Verkäufer Ersatz zu beschaffen. Außerdem verursacht der Zusammenbau beim Endverbraucher unerwünschte Verschmutzungen, beispielsweise durch Leimreste, Staub, Späne etc. Nach erfolgter Montage muss der Endverbraucher also wieder den Montageort reinigen und auch das Werkzeug wegräumen.

Es sind aus dem Stand der Technik auch Möbel bekannt, die sich durch Einwinkeln (d.h. eine Schwenkbewegung) und/oder Verschnappen (d.h. eine Verrastung) der miteinander zu verbindenden Möbelteile bzw. Platten über korrespondierende Profile mit mechanischen Verriegelungselementen montieren lassen. Eine solche Verbindung wird auch als Klick-Verbindung bezeichnet. Solchermaßen zu montierende Möbel bieten eine gewisse Verbesserung. Allerdings benötigen solche Lösungen ein Vollmaterial nennenswerter Dicke als Plattenmaterial, da nur so ausreichend stabile Profile erzeugt werden können. Die daraus hergestellten Verbindungsanordnungen und in der Folge die daraus hergestellten Möbel sind daher vergleichsweise schwer und schlecht zu manipulieren. Der Monteur, der als Endverbraucher in der Regel ungeübt ist, muss daher sowohl beim Transport als auch bei der Montage ein relativ hohes Gewicht handhaben, was häufig auch die Unterstützung durch eine Hilfsperson erfordert.

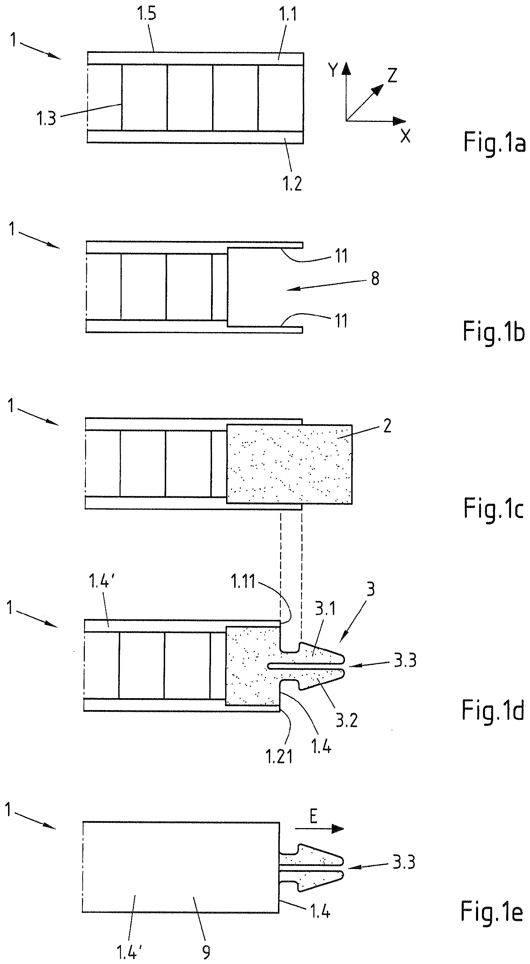

Aus der DE 10 2007 007 832 A1 ist ein Paneel bekannt, welches aus einer Sandwichkonstruktion mit zwei Decklagen, zwei Wabenlagen und einer zwischen den Wabenlagen angeordneten Zwischenschicht besteht. Auch hierbei handelt es sich um ein Leichtbauplatte im Sinne der vorliegenden Erfindung, wobei die beiden Wabenlagen und die Zwischenschicht zusammen die Mittellage bilden. Die Zwischenschicht besteht aus einem Holzwerkstoff und weist an einer Seite ein Federprofil und auf der anderen Seite ein Nutprofil auf. Das Federprofil besteht dabei aus einem Vorsprung in Form einer Pfeilspitze (Fig. 1, Pos. 14), das Nutprofil ist dazu komplementär (Negativform) ausgebildet. Durch Zusammenfügen eines Federprofils mit einem entsprechenden Nutprofil eines anderen Paneels desselben Typs lassen sich zwei Paneele miteinander verbinden. Die Profile, d.h. das Federprofil und das Nutprofil, sind dabei so ausgebildet, dass eine mechanische Verriegelung in Längsrichtung (Richtung der Plattenebene) und in der Richtung senkrecht zur Längsrichtung (Richtung senkrecht zur Plattenebene), also ein Formschluss, gegeben ist. Solche Paneele sind aber lediglich geeignet, eine flächige Verkleidung bzw. einen flächigen Belag herzustellen.

Bei dem eingangs genannten Stand der Technik aus der DE 295 13 784 U1 sind miteinander in einer Ebene zu verbindende Leichtbauplatten jeweils mit einem Riegel versehen, der ein Nutprofil aufweist, wobei zur Verbindung zweier benachbarter Leichtbauplatten eine Verbindungsleiste in die Nuten eingeschoben wird. Dadurch wird eine mechanische Verriegelung in einer Richtung senkrecht zur Längsrichtung

(Erstreckungsrichtung der Decklagen) bewirkt. Auch diese Art der Verbindung zweier Platten ist lediglich geeignet, eine flächige Verkleidung herzustellen.

Ausgehend von dem zuvor beschriebenen Stand der Technik ist es eine Aufgabe der vorliegenden Erfindung, die Herstellung einer Verbindungsanordnung, insbesondere die Herstellung eines Möbels, zu vereinfachen.

Die zuvor hergeleitete und aufgezeigte Aufgabe wird gemäß einer ersten Lehre der vorliegenden Erfindung bei einer Leichtbauplatte gemäß Oberbegriff von Patentanspruch 1 durch die Merkmale des kennzeichnenden Teils von Patentanspruch 1 gelöst. Alternativ wird die Aufgabe bei einer Leichtbauplatte gemäß Oberbegriff von Patentanspruch 2 durch die Merkmale des kennzeichnenden Teils von Patentanspruch 2 gelöst. Die Aufgabe wird also gelöst durch eine Leichtbauplatte mit einer sich in einer Längsrichtung (d.h. in Richtung der Plattenebene) erstreckenden oberen Decklage, mit einer sich parallel zur oberen Decklage erstreckenden unteren Decklage, die in einer Richtung senkrecht zur Längsrichtung (d.h. in Richtung senkrecht zur Plattenebene) von der oberen Decklage beabstandet ist, mit einer sich zwischen der oberen Decklage und der unteren Decklage erstreckenden leichten Mittellage und mit einem sich zwischen der oberen Decklage und der unteren Decklage erstreckenden Riegel aus Holz oder Holzwerkstoff, wobei der Riegel mit beiden Decklagen verbunden ist, wobei der Riegel ein herausgearbeitetes, also durch spanende Bearbeitung erzeugtes, Federprofil und/oder Nutprofil oder ein extrudiertes oder gepresstes Federprofil und/oder Nutprofil aufweist, das zur mechanischen Verriegelung in Längsrichtung und in der Richtung senkrecht zur Längsrichtung mit einem korrespondierenden Profil eines weiteren Bauteils ausgebildet ist.

Mit einem korrespondierenden Profil ist ein Profil gemeint, welches zumindest abschnittsweise komplementär zu dem anderen Profil geformt ist, so dass das eine Profil (Federprofil) in das andere Profil (Nutprofil) passt. Im zusammengesetzten Zustand, das heißt wenn die Profile ineinander gesteckt sind, besteht eine mechanische Verriegelung, das heißt die Form des im Riegel vorgesehenen Profils ist so ausgebildet, dass ein Formschluss erzeugt werden kann. Dies gilt auch für die Form des Profils des anderen Bauteils. Dabei kann das jeweilige Profil bzw. können die Profile so ausgebildet sein, dass nur ein Formschluss besteht oder dass zusätzlich zum Formschluss auch ein Kraftschluss besteht.

Die erfindungsgemäße Leichtbauplatte kann neben dem zuvor genannten Riegel auch noch weitere Riegel aufweisen, von denen einer oder alle ebenfalls ein wie zuvor definiertes Profil aufweisen kann/können. Der bzw. die Riegel bestehen bevorzugt aus Holz oder einem Holzwerkstoff. Mit Holz ist dabei massives Holz gemeint. Mit einem Holzwerkstoff ist dagegen ein Presskörper aus mit einem Bindemittel versehenen Holzpartikeln (Holzspänen, Holzfasern und/oder Holzstrands) gemeint. Der Riegel kann damit also ein streifenförmiger Abschnitt einer Holzwerkstoffplatte, insbesondere Sperrholz-, Span-, Faser- oder OSB-Platte (Oriented-Strand-Board-Platte) sein. Alternativ kann der zusätzliche oder können die zusätzlichen Riegel aber auch aus Kunststoff, beispielsweise ABS (Acrylnitril-Butadien-Styrol), PVC (Polyvinylchlorid) und/oder PU (Polyurethan) bestehen sowie ggf. auch Kunststoff-Recyclingmaterial enthalten. Oder der zusätzliche oder die zusätzlichen Riegel besteht/bestehen aus WPC (Wood Plastic Composite), das heißt einem Holzpartikel-Kunststoff-Verbundwerkstoff, oder aus einem Metall, zum Beispiel Aluminium. Auch Kombinationen der genannten Riegelmaterialien sind möglich. Soweit ein Holzwerkstoff als Riegelmaterial eingesetzt wird, können die verwendeten Holzpartikel wie Späne, Fasern oder Strands auch eine vorgegebene Orientierung aufweisen, d.h. die meisten Holzpartikel pro Volumeneinheit (pro cm³) sind in der selben Richtung orientiert, um entsprechend der vorgesehenen Profilgeometrie bestimmte Elastizitätseigenschaften zu erreichen. Auch können, insbesondere bei Verwendung eines Holzwerkstoffes als Riegel, Armierungen oder sonstige Verstärkungen vorgesehen sein, beispielsweise Kunststoff- und/oder Stoff- und/oder Metallfasern oder -streifen.

Der das Profil aufweisende jeweilige Riegel kann entweder nur ein Federprofil oder nur ein Nutprofil oder sowohl ein Nutals auch ein Federprofil aufweisen. Dabei kann das Profil in dem jeweiligen Riegel wie gesagt durch Herausarbeiten, insbesondere durch Fräsen oder Räumen, erzeugt werden. Es ist aber auch möglich, insbesondere bei einem Riegel aus Kunststoff oder WPC, das Profil zusammen mit dem Riegel zu extrudieren. Mit anderen Worten wird dann der Riegel gleichzeitig mit dem Profil erzeugt. Auch ist es denkbar, das Profil durch Pressen zu erzeugen, wobei insbesondere beim Pressen des Riegels das Profil gleichzeitig mit erzeugt wird.

Eine wie zuvor beschriebene Leichtbauplatte hat den Vorteil, dass sie aufgrund ihres geringen Gewichts besonders leicht zu handhaben ist, was insbesondere bei der Herstellung von Möbeln für einen in der Regel ungeübten Endverbraucher vorteilhaft ist. Durch das erstmalige Vorsehen eines eine mechanische Verriegelung ermöglichenden Federprofils und/oder Nutprofils in einem oder mehreren Riegeln einer Leichtbauplatte wird außerdem die Montage einer Verbindungsanordnung, insbesondere die Montage eines Möbels, erheblich vereinfacht, da auf Beschläge jeglicher Art verzichtet werden kann. Der Endverbraucher muss lediglich die zwei korrespondierenden Profile der Leichtbauplatte und des damit zu verbindenden Bauteils zusammenstecken bzw. ineinander fügen, beispielsweise durch Einwinkeln (Klick-Verbindung) oder durch Verschnappen (Rastverbindung). Auch eine Kombination einer Klickverbindung und einer Rastverbindung ist beim Zusammensetzen eines korrespondierenden Profilpaares denkbar.

Indem erfindungsgemäß die Möglichkeit geschaffen wird, erstmalig eine Leichtbauplatte mit einem weiteren Bauteil auf die beschriebene Art und Weise (Klick- und/oder Rastverbindung) zu verbinden, kann auch auf den Einsatz von Werkzeugen verzichtet werden. Eine Verbindungsanordnung, insbesondere ein Möbel, kann sehr einfach, rasch und ohne den Einsatz von Werkzeugen montiert werden und ist trotzdem sehr leicht und damit einfach zu manipulieren.

Wie bereits zuvor erwähnt, kann die leichte Mittellage aus verschiedenen Materialien bestehen. Bevorzugt wird als leichte Mittellage ein Wabenkern, insbesondere eine Pappwabenstruktur, und/oder ein Kunststoff, insbesondere ein expandierter Kunststoff mit Gaseinschlüssen, und/oder ein leichter Holzwerkstoff oder leichtes Holz, verwendet. Auch andere mit Hohlräumen versehene Materialien sind denkbar. Der Begriff "leicht" bedeutet dabei, dass die Dichte geringer als diejenige der Decklagen ist.

Auch das Material der Decklagen kann wie zuvor erwähnt auf verschiedene Weise ausgebildet sein. Bevorzugt kann die obere und/oder untere Decklage jeweils von einer oder mehreren Holzwerkstoffplatten gebildet sein, zum Beispiel Span-, Faser- oder OSB-Platten. Im Falle einer Faserplatte handelt es sich bevorzugt um eine MDF-Platte. Alternativ zu Holzwerkstoffplatten kann auch ein Schichtstoff eingesetzt werden, das heißt eine Lage aus mehreren miteinander verpressten harzgetränkten Papieren. Die Decklagen können auch dekorativ beschichtet sein. In diesem Zusammenhang sei darauf hingewiesen, dass in dem Fall, dass in dem jeweiligen ein Profil aufweisenden Riegel ein Nutprofil vorgesehen ist, welches sich durch die angrenzende Decklage hindurch fortsetzt, diese Decklage gegebenenfalls aus zwei nicht unmittelbar miteinander verbundenen Teilen besteht, nämlich in dem Fall, wenn die Nut bzw. das Nutprofil sich über die gesamte Quer- oder Längserstreckung der Leichtbauplatte fortsetzt; in einem solchen Fall kann also die Decklage aus zwei oder mehreren Deckplatten, beispielsweise Holzwerkstoffplatten, bestehen.

Der Riegel, der das jeweilige Profil aufweist, kann wie gesagt ein einzelner Riegel sein, der also nicht mit anderen Riegeln verbunden ist, sondern ausschließlich mit beiden Decklagen. Der Riegel kann aber auch Teil eines Rahmens aus mehreren Riegeln sein, wobei der Riegel auch in diesem Fall mit beiden Decklagen verbunden ist. Die Verbindung des das Profil aufweisenden Riegels mit den Decklagen erfolgt bevorzugt durch Verkleben.

Der das Profil aufweisende Riegel kann ein Querriegel oder ein Längsriegel sein. Querriegel bedeutet, dass der Riegel sich quer zur Längsrichtung der Leichtbauplatte bzw. der Decklagen erstreckt. Längsriegel bedeutet, dass sich der Riegel in der Längsrichtung erstreckt. Dabei kann sich der Riegel über die gesamte Breite der Leichtbauplatte (Querriegel) oder über die gesamte Länge der Leichtbauplatte (Längsriegel) erstrecken. Der Riegel kann über seine gesamte Erstreckung mit dem Profil bzw. den Profilen versehen sein.

Wie gesagt kann die Leichtbauplatte auch mehrere Riegel der zuvor definierten Art aufweisen, wobei diese dann auch unterschiedlich ausgebildet sein können.

Im Folgenden werden nun weitere Ausgestaltungen der erfindungsgemäßen Leichtbauplatte beschrieben.

Gemäß einer ersten Ausgestaltung kann das Federprofil einen ersten sich abschnittsweise erweiternden, insbesondere hakenförmigen, Vorsprung aufweisen. Der Vorsprung vergrößert sich also in Richtung zu seinem vorderen (distalen) Ende vorübergehend bzw. sein Querschnitt erweitert sich. Der Vorsprung kann, wenn er hakenförmig ist, die Form einer Pfeilspitze oder einer halben Pfeilspitze haben. Im Falle einer Pfeilspitze hat der Vorsprung im Querschnitt sowohl zur Oberseite als auch zur Unterseite hin einen Haken (Widerhaken), im Falle einer halben Pfeilspitze nur zu einer Seite hin.

Das Federprofil kann auch einen weiteren Vorsprung aufweisen, der sich, insbesondere bezogen auf die Richtung senkrecht zur Längsrichtung, benachbart zu dem ersten Vorsprung erstreckt, wobei ein Spalt zwischen dem weiteren Vorsprung und dem ersten Vorsprung ausgebildet ist. Dabei kann der weitere Vorsprung ebenfalls sich abschnittsweise erweiternd, insbesondere hakenförmig, ausgebildet sein und vorzugsweise eine Form haben, die spiegelsymmetrisch zu der Form des ersten Vorsprungs ist. In letzterem Fall hat das Federprofil insbesondere die Form einer Pfeilspitze mit einem nach oben und einem nach unten weisenden Haken (Widerhaken), wobei sich ein Spalt bzw. Schlitz von dem distalen Ende durch den Pfeil in Richtung der Schulter des Federprofils erstreckt. Ein solches geschlitztes Federprofil hat den Vorteil, dass die beiden Vorsprünge des Federprofils aufeinander zu bewegt werden können, nämlich um die Breite des Schlitzes, was ein Verschnappen (Verrasten) mit einem korrespondierenden Nutprofil begünstigt.

Der erste und/oder weitere Vorsprung des Federprofils kann sich über eine die Schmalseite oder die Oberseite der Leichtbauplatte bildende ebene Fläche hinaus in eine Erstreckungsrichtung erstrecken. Die ebene Fläche stellt den Beginn des Federprofils, das heißt das hintere Ende bzw. die Schulter, dar. Von dieser Stelle erstreckt sich das Federprofil bzw. der erste und/oder weitere Vorsprung in besagte Erstreckungsrichtung zum distalen Ende. Handelt es sich bei der ebenen Fläche um die Schmalseite der Leichtbauplatte, verläuft die Erstreckungsrichtung parallel zur Längsrichtung und damit in Richtung der Plattenebene. Handelt es sich bei der ebenen Fläche um die Oberseite der Leichtbauplatte, verläuft die Erstreckungsrichtung senkrecht zur Längsrichtung und damit senkrecht zur Plattenebene.

In dem Fall, dass es sich bei der ebenen Fläche, aus der sich der erste und/oder weitere Vorsprung in Erstreckungsrichtung erstreckt, um die Schmalseite der Leichtbauplatte handelt, ist es bevorzugt, dass die schmalseitigen Kanten der oberen Decklage und/oder unteren Decklage bündig zu der ebenen Fläche verlaufen. Es ist aber alternativ auch denkbar, dass die schmalseitigen Kanten der oberen Decklage und/oder unteren Decklage Teil des jeweiligen Vorsprungs des Federprofils sind. In letzterem Fall kann also die obere und/oder untere Decklage Teil des Federprofils sein.

Gemäß einer weiteren Ausgestaltung kann vorgesehen sein, dass das Nutprofil einen Nutgrund - damit ist der tiefste Punkt der Nut gemeint - und zwei sich gegenüberliegende Nutwände aufweist, die sich vom Nutgrund zu einer Nutöffnung - gemeint ist das obere offene Ende der Nut - erstrecken. Dabei hat mindestens eine der Nutwände, bzw. haben vorzugsweise beide Nutwände, einen zum Nutinnern vorspringenden Abschnitt, der einen Anschlag in Richtung vom Nutgrund zur Nutöffnung bildet. Auf diese Weise kann mit einfachen Mitteln eine mechanische Verriegelung im zusammengefügten Zustand zweier korrespondierender Profile gewährleistet werden. Insbesondere kann sich das Nutprofil vom Nutgrund zur Nutöffnung hin abschnittsweise erweitern und sich im weiteren Verlauf (vom Nutgrund zur Nutöffnung) wieder verengen. Die Verengung bildet dann bevorzugt einen Anschlag in Richtung vom Nutgrund zur Nutöffnung, der die mechanische Verriegelung bewirkt.

Die Nutöffnung kann, wie bereits zuvor erwähnt wurde, innerhalb der oberen Decklage liegen. In diesem Fall setzt sich also das Nutprofil, welches in dem Riegel vorgesehen ist, durch die angrenzende Decklage hindurch fort. Die Nutöffnung wird also von zwei gegenüberliegenden Kanten der oberen Decklage gebildet. Die Nutöffnung kann aber auch zwischen der oberen Decklage und der unteren Decklage angeordnet sein. Dabei ist es auch denkbar, dass die schmalseitigen Kanten der oberen Decklage und/oder unteren Decklage Teil des Nutprofils sind. In diesem Fall kann also die obere und/oder untere Decklage Teil des Nutprofils sein.

Der Verlauf der Nutwände (vom Nutgrund zur Nutöffnung) kann bezogen auf eine senkrechte durch die Nut verlaufende Ebene spiegelsymmetrisch sein. Grundsätzlich ist es aber auch denkbar, dass die beiden Nutwände einen unterschiedlichen Verlauf haben.

Gemäß noch einer Ausgestaltung ist vorgesehen, dass das Federprofil und/oder Nutprofil einen in Richtung quer zur Längsrichtung gleichmäßigen Querschnitt hat. Mit anderen Worten ändert sich in diesem Fall der Querschnitt des Profils nicht über die Länge (Erstreckungsrichtung) des Riegels. Erfindungsgemäß kann ein Teil der Länge, insbesondere der größte Teil der Länge, oder aber die gesamte Länge des Riegels, mit einem Profil versehen sein. Mit anderen Worten kann also vorgesehen sein, dass sich das Federprofil und/oder Nutprofil über die gesamte Länge des Riegels von einem ersten stirnseitigen Ende zu einem zweiten stirnseitigen Ende des Riegels erstreckt. Im Falle eines Nutprofils endet das Nutprofil also an dem jeweiligen stirnseitigen Ende des Riegels, das heißt das stirnseitige Ende des Nutprofils liegt in derselben Ebene wie das stirnseitige Ende des Riegels. Um das stirnseitige Ende des Riegels in dem Fall, dass das Nutprofil bis dorthin reicht, besser bekanten zu können, ist es vorteilhaft, wenn das stirnseitige Ende des Nutprofils und damit das stirnseitige Ende des Riegels abgedeckt wird. Insbesondere ist das erste und/oder zweite stirnseitige Ende des Riegels von einem zu dem Riegel quer verlaufenden weiteren Riegel, der sich ebenfalls zwischen der oberen Decklage und der unteren Decklage erstreckt, abgedeckt. Auf diese Weise sind die Schmalseiten der Leichtbauplatte nahezu vollständig geschlossen, gegebenenfalls mit Ausnahme eines schmalen Spaltes im Bereich der oberen Decklagenkante.
Gemäß noch einer weiteren Ausgestaltung berührt der Riegel die obere Decklage und/oder untere Decklage. Bevorzugt berührt der Riegel beide Decklagen. Besonders bevorzugt ist der Riegel mit der oberen und/oder unteren Decklage fest verbunden, beispielsweise durch Verkleben. Dabei kann in dem Bereich, in den der Riegel zwischen den Decklagen eingesetzt wird, eine Aussparung vorgesehen sein, die bis in das Material der Decklagen reicht. Mit anderen Worten kann die Decklage, die an den Riegel unmittelbar angrenzt, eine innenseitige Ausnehmung, z.B. Ausfräsung, aufweisen, die den Riegel aufnimmt. In diesem Bereich ist die Decklage also dünner als im übrigen Teil. Insbesondere ist also der Abstand zwischen oberer Decklage und unterer Decklage in dem Bereich, in dem der Riegel die jeweilige Decklage berührt, größer als in einem anderen Bereich. Insbesondere ist der Abstand zwischen oberer Decklage und unterer Decklage in dem Bereich, in welchem die Mittellage verläuft, kleiner als in dem Bereich, in welchem der Riegel verläuft.

Die Aufgabe wird ferner gemäß einer zweiten Lehre der vorliegenden Erfindung gelöst durch eine Verbindungsanordnung, die Teil eines Möbels sein oder ein Möbel bilden kann, mit einer wie zuvor definierten Leichtbauplatte und mit einem weiteren Bauteil, das ein zu dem im Riegel der Leichtbauplatte vorgesehenen Profil korrespondierendes Profil aufweist, wobei das weitere Bauteil mit der Leichtbauplatte so über die Profile verbunden ist, dass eine mechanische Verriegelung in Längsrichtung und in der Richtung senkrecht zur Längsrichtung besteht.

Bei dem weiteren Bauteil handelt es sich insbesondere um eine weitere Leichtbauplatte, bevorzugt ebenfalls um eine Leichtbauplatte, wie sie zuvor definiert wurde. Dabei kann die eine Leichtbauplatte ein Federprofil und die andere Leichtbauplatte ein dazu korrespondierendes Nutprofil aufweisen, wobei die beiden Leichtbauplatten im zusammengefügten Zustand die Verbindungsanordnung oder einen Teil davon bilden.

Das weitere Bauteil kann auch eine Holzwerkstoffplatte sein, beispielsweise eine Sperrholz-, Span-, Faser- oder OSB-Platte.

Auch kann es sich bei dem weiteren Bauteil um eine Verbindungsleiste handeln, die bevorzugt aus Holz oder Holzwerkstoff oder aus einem Kunststoff, insbesondere extrudierten Kunststoff, besteht. Die Verbindungsleiste kann als Zwischenstück zur Verbindung der erfindungsgemäßen Leichtbauplatte mit mindestens einem anderen Bauteil verwendet werden. Das andere Bauteil kann eine andere Platten, z.B. eine Holzwerkstoffplatte oder eine andere Leichtbauplatte, insbesondere eine andere Leichtbauplatte desselben Typs, sein. Mit anderen Worten kann die erfindungsgemäße Verbindungsanordnung in dem Fall, dass das weitere Bauteil eine Verbindungsleiste ist, zusätzlich zu dem weiteren Bauteil noch andere Bauteile aufweisen, die mit der Verbindungsleiste verbunden sind.

Die Verbindung zwischen der Leichtbauplatte und dem weiteren Bauteil erfolgt erfindungsgemäß in einer Weise, die eine mechanische Verriegelung, also einen Formschluss, erzeugt. Dabei kann die Leichtbauplatte mit dem weiteren Bauteil durch Verschnappen und/oder Einwinkeln verbunden sein. Mit anderen Worten sind die korrespondierenden Profile der erfindungsgemäßen Leichtbauplatte und des damit verbundenen weiteren Bauteils jeweils so geformt, dass eine mechanische Verriegelung und insbesondere eine Verbindung durch Verschnappen und/oder Einwinkeln möglich ist.

Schließlich wird die Aufgabe auch gelöst durch ein Verfahren zum Herstellen einer wie zuvor beschriebenen Verbindungsanordnung, bei dem die folgenden Schritte, bevorzugt in der folgenden Reihenfolge, durchgeführt werden:
- Bereitstellen einer Leichtbauplatte mit einer sich in einer Längsrichtung erstreckenden oberen Decklage, mit einer sich parallel zur oberen Decklage erstreckenden unteren Decklage, die in einer Richtung senkrecht zur Längsrichtung von der oberen Decklage beabstandet ist, mit einer sich zwischen der oberen Decklage und der unteren Decklage erstreckenden leichten Mittellage und mit einem sich zwischen der oberen Decklage und der unteren Decklage erstreckenden Riegel aus Holz oder Holzwerkstoff,
- Herausarbeiten eines Federprofils und/oder Nutprofils aus dem Riegel mit einem spanabhebenden Werkzeug und
- Verbinden der Leichtbauplatte mit einem weiteren Bauteil, das ein zu dem im Riegel der Leichtbauplatte vorgesehenen Profil korrespondierendes Profil aufweist, wobei das weitere Bauteil mit der Leichtbauplatte so über die Profile verbunden wird, dass eine mechanische Verriegelung in Längsrichtung und in der Richtung senkrecht zur Längsrichtung besteht.

Bei dem zuvor erwähnten spanabhebenden Werkzeug kann es sich um einen Fräskopf oder dergleichen handeln.

Wie bereits erwähnt, kann das Profil auch auf andere Weise als durch Herausarbeiten hergestellt werden, beispielsweise durch Extrudieren oder durch Pressen, bevorzugt gleichzeitig mit der Herstellung des Riegels. Letzterer kann wie gesagt auch aus anderen Materialien als aus einem Holzwerkstoff oder aus Holz bestehen, beispielsweise aus Kunststoff, WPC oder Metall.

Der Schritt des Herstellens, insbesondere Herausarbeitens, des Profils kann auch vor dem Schritt des Bereitstellens der Leichtbauplatte erfolgen. Mit anderen Worten kann das Profil im Riegel bereits vorgesehen sein, bevor die einzelnen Lagen der Leichtbauplatte zusammen mit dem Riegel zusammengefügt, insbesondere zusammengeklebt, werden. In diesem Fall ist es also denkbar, zunächst eine untere Decklage bereitzustellen, auf diese dann den bereits mit einem Profil versehenen Riegel sowie die Mittellage aufzulegen und schließlich darauf die obere Decklage aufzulegen.

Alternativ kann aber auch erst eine Leichtbauplatte aus unterer Decklage, darauf aufliegender Mittellage und wiederum darauf aufliegender oberer Decklage bereitgestellt werden und der (gegebenenfalls bereits mit dem Profil versehene) Riegel erst anschließend in eine entsprechende Ausnehmung in der Leichtbauplatte eingesetzt werden. Mit anderen Worten kann vorgesehen sein, dass beim Schritt des Bereitstellens der Leichtbauplatte zunächst eine Leichtbauplatte (insbesondere eine Leichtbauplatte ohne Riegel) mit einer sich in einer Längsrichtung erstreckenden oberen Decklage, mit einer sich parallel zur oberen Decklage erstreckenden unteren Decklage, die in einer Richtung senkrecht zur Längsrichtung von der oberen Decklage beabstandet ist, und mit einer sich zwischen der oberen Decklage und der unteren Decklage erstreckenden leichten Mittellage bereitgestellt wird, dann eine Aussparung (insbesondere im Kantenbereich) in der Leichtbauplatte vorgesehen wird, was durch spanende Bearbeitung erfolgen kann, und dann in die Aussparung der Riegel eingesetzt, insbesondere eingeklebt, wird, wobei im Anschluss daran der Schritt des Herausarbeitens des Federprofils und/oder Nutprofils aus dem Riegel erfolgt.

Gemäß einer Ausgestaltung ist vorgesehen, dass beim Schritt des Herausarbeitens des Federprofils und/oder Nutprofils aus dem Riegel das spanabhebende Werkzeug auch die obere Decklage und/oder untere Decklage formt bzw. bearbeitet. Insbesondere ist die jeweilige Decklage Teil des Profils.

Wie schon erwähnt, kann das Federprofil und/oder Nutprofil über die gesamte Länge des Riegels von einem ersten stirnseitigen Ende zu einem zweiten stirnseitigen Ende des Riegels vorgesehen werden, das jeweilige Profil endet also am stirnseitigen Ende des Riegels. In dem Fall, dass es sich bei dem im Riegel vorgesehenen Profil um ein Nutprofil handelt, kann vorgesehen sein, dass nach dem Schritt des Herausarbeitens des Nutprofils aus dem Riegel zwischen den Decklagen eine quer zu dem Riegel verlaufende Aussparung in der Leichtbauplatte vorgesehen wird und dann in die Aussparung ein quer zu dem Riegel verlaufender weiterer Riegel so eingesetzt wird, dass der weitere Riegel eines der stirnseitigen Enden des das Nutprofil aufweisenden Riegels abdeckt. Dadurch kann das in einem oder beiden stirnseitigen Enden des Riegels geformte Nutprofil mit einfachen Mitteln, nämlich mit einem weiteren Riegel, verdeckt werden. Auf diese Weise lässt sich die Schmalseite bzw. lassen sich die Schmalseiten der Leichtbauplatte besonders einfach bekanten und/oder beschichten, wie im Folgenden noch erläutert wird.

Bei der erfindungsgemäßen Leichtbauplatte und bei dem erfindungsgemäßen Verfahren können die zuvor beschriebenen Riegel, das heißt die mit einem Profil versehenen Riegel und die weiteren Riegel, die die mit dem Profil versehenen Riegel stirnseitig abdecken, auch paarweise eingesetzt werden. So kann zunächst ein erstes Riegelpaar von zwei parallelen Riegeln eingesetzt werden, insbesondere in eine für den jeweiligen Riegel zuvor hergestellte Aussparung zwischen den Decklagen. Dann können in die beiden Riegel des Riegelpaares die gewünschten Profile eingefräst werden, das heißt ein Federprofil und/oder ein Nutprofil. Anschließend kann dann ein zweites Riegelpaar mit ebenfalls zueinander parallelen Riegeln eingesetzt werden, wobei die Riegel des zweiten Riegelpaares quer zu den Riegeln des ersten Riegelpaares verlaufen. Die Riegel des zweiten Riegelpaares können ebenfalls in eine entsprechend vorher hergestellte Aussparung zwischen den Decklagen eingesetzt werden. Die beiden Riegel des zweiten Riegelpaares verdecken auf diese Weise die beiden stirnseitigen Enden der beiden anderen Riegel und damit auch ein bis zu dem jeweiligen stirnseitigen Ende verlaufendes Nutprofil. Anschließend können die Schmalseiten mit einem Kantenband versehen werden (bekantet werden).

Vor dem Verbinden der Leichtbauplatte mit einem weiteren Bauteil kann gemäß noch einer Ausgestaltung vorgesehen sein, dass mindestens eine Schmalseite, vorzugsweise alle Schmalseiten, der Leichtbauplatte nach dem Schritt des Herausarbeitens eines Federprofils und/oder Nutprofils aus dem Riegel bekantet und/oder mit einer Beschichtung versehen wird/werden. Insbesondere kann die jeweilige Schmalseite mit einer Abdeckung in Form eines harzgetränkten Papiers, eines Schichtstoffes, einer Holz-, Holzwerkstoff- oder Kunststoffleiste oder einer Folie versehen werden.

Die erfindungsgemäße Leichtbauplatte kann anschließend noch weiter bearbeitet werden, beispielsweise durch Einbringen von Löchern, beispielsweise Löchern für Dübel oder Inserts (Einsätze), oder durch Einsetzen oder Anbringen von Beschlagselementen, beispielsweise Scharnierelementen, Ladenauszügen etc.

Die Erfindung ist nicht auf den Einsatz für Möbel beschränkt. Leichtbauplatten mit den zuvor definierten Merkmalen können auch als Stellwände, Raumabtrennungen oder im Messebau eingesetzt werden.

Es gibt nun eine Vielzahl von Möglichkeiten, die erfindungsgemäße Leichtbauplatte, die erfindungsgemäße Verbindungsanordnung und das erfindungsgemäße Verfahren auszugestalten und weiterzubilden. Hierzu sei einerseits verwiesen auf die dem Patentanspruch 1 nachgeordneten Patentansprüche, andererseits auf die Beschreibung von Ausführungsbeispielen in Verbindung mit der Zeichnung. In der Zeichnung zeigen:
- Fig. 1a) bis e): schematisch die Herstellung eines Federprofils an einer Leichtbauplatte,
- Fig. 2a) bis c): schematisch die Herstellung eines Nutprofils an einer anderen Leichtbauplatte,
- Fig. 3a) bis e): schematisch die Herstellung eines Nutprofils an noch einer anderen Leichtbauplatte,
- Fig. 4a) und b): ein erstes Ausführungsbeispiel einer Verbindungsanordnung,
- Fig. 5a): ein weiteres Ausführungsbeispiel einer Verbindungsanordnung und
- Fig. 5b): noch ein weiteres Ausführungsbeispiel einer Verbindungsanordnung.

Fig. 1a) zeigt eine Leichtbauplatte 1 mit einer sich in einer Längsrichtung X erstreckenden oberen Decklage 1.1, mit einer sich parallel zur obere Decklage 1.1 erstreckenden unteren Decklage 1.2, die in einer Richtung Y senkrecht zur Längsrichtung X von der oberen Decklage 1.1 beabstandet ist, und mit einer sich zwischen der oberen Decklage 1.1 und der unteren Decklage 1.2 erstreckenden leichten Mittellage 1.3.

Bei dieser Leichtbauplatte 1 ist als obere und untere Decklage 1.1 bzw. 1.2 jeweils eine Holzwerkstoffplatte und als Mittellage 1.3 eine Kartonwabenstruktur vorgesehen.

Die so bereitgestellte Leichtbauplatte 1 wird dann, wie in Fig. 1b) dargestellt, einer spanabhebenden Bearbeitung unterzogen, wobei eine Aussparung 8 für einen Riegel 2 zwischen den Decklagen 1.1 und 1.2 vorgesehen wird. Die Aussparung 8 erstreckt sich (in Richtung Y) nicht nur durch die gesamte Mittellage 1.3, sondern bis in die beiden Decklagen 1.1 und 1.2. Mit anderen Worten wird auch von den Decklagen 1.1 und 1.2 Material entfernt, so dass jeweils eine Ausnehmung 11 in den Decklagen 1.1 und 1.2 entsteht.

In Fig. 1c) ist gezeigt, wie ein Riegel 2 mit rechteckigem Querschnitt aus einem Holzwerkstoff in die Aussparung 8 eingesetzt wird. Der Riegel 2 wird mit den beiden Decklagen 1.1 und 1.2 durch Verkleben fest verbunden. Die Breite des Riegels 2 (Abmessung in Richtung X) ist dabei größer als die Tiefe der Aussparung 8. Dadurch ragt der Riegel 2 aus der Aussparung 8 in Längsrichtung X heraus. Auf diese Weise kann in dem Riegel 2 ein Federprofil 3 vorgesehen werden (Fig. 1d)) ohne dass dabei nennenswert Decklagenmaterial abgetragen werden muss. Fräsverluste werden dadurch verhindert. Wie die gestrichelten Linien darstellen, wird bei der Herstellung des Federprofils 3 nur ein sehr geringer Teil der Decklagen 1.1 und 1.2 abgetragen. Das ist insbesondere dann vorteilhaft, wenn die Decklagen 1.1 und 1.2 bereits mit einem Dekor versehen sind.

Das Federprofil 3 aus Fig. 1d) weist zwei spiegelsymmetrisch geformte Vorsprünge 3.1 und 3.2 in Hakenform auf. Zwischen den Vorsprüngen ist ein Spalt 3.3 vorgesehen. Jeder Vorsprung 3.1 und 3.2 hat dabei die Form einer halben Pfeilspitze. Anders gesagt hat das Federprofil die Form einer (vollständigen) Pfeilspitze mit einem Schlitz, der sich vom distalen Ende in Richtung der Profilschulter erstreckt. Der Schlitz bzw. Spalt 3.3 erstreckt sich in diesem Fall vom vorderen Ende des Federprofils 3 bzw. der Vorsprünge 3.1 und 3.2 bis hinter die Schmalseite 1.4 der Leichtbauplatte 1.

Der erste Vorsprung 3.1 und der weitere Vorsprung 3.2 des Federprofils 3 erstreckt sich über die Schmalseite 1.4 der Leichtbauplatte 1, die hier von einer ebenen Fläche gebildet wird, hinaus in Richtung der Längsrichtung X. Dabei verlaufen die schmalseitigen Kanten 1.11 und 1.21 der oberen und unteren Decklage 1.1 und 1.2 bündig zu der ebenen Fläche. Mit anderen Worten bilden die schmalseitigen Kanten 1.11 und 1.21 zusammen mit der ebenen Fläche die Schmalseite der Leichtbauplatte 1.

Fig. 1e) zeigt schließlich, dass nach Herstellung des Federprofils 3 einige oder alle Schmalseiten 1.4 bzw. 1.4' der Leichtbauplatte 1 bekantet werden können und/oder an der jeweiligen Schmalseite 1.4 bzw. 1.4' eine Beschichtung 9 aufgebracht werden kann. Deutlich erkennbar ist der Spalt 3.3, der dem Federprofil 3 die notwendige Verformbarkeit verleiht. Der Spalt 3.3 erstreckt sich wie gesagt vom vorderen (distalen) Ende des Federprofils 3 über seine gesamte Länge bis über den Schulterbereich, hier durch die Schmalseite 1.4 definiert, hinaus in den von den Decklagen 1.1 und 1.2 überdeckten Bereich des Riegels 2.

Nachdem das Federprofil 3 gefräst worden ist, können vorteilhaft weitere Nuten in die Leichtbauplatte 1 eingefräst werden, beispielsweise zur Aufnahme einer Rückwand.

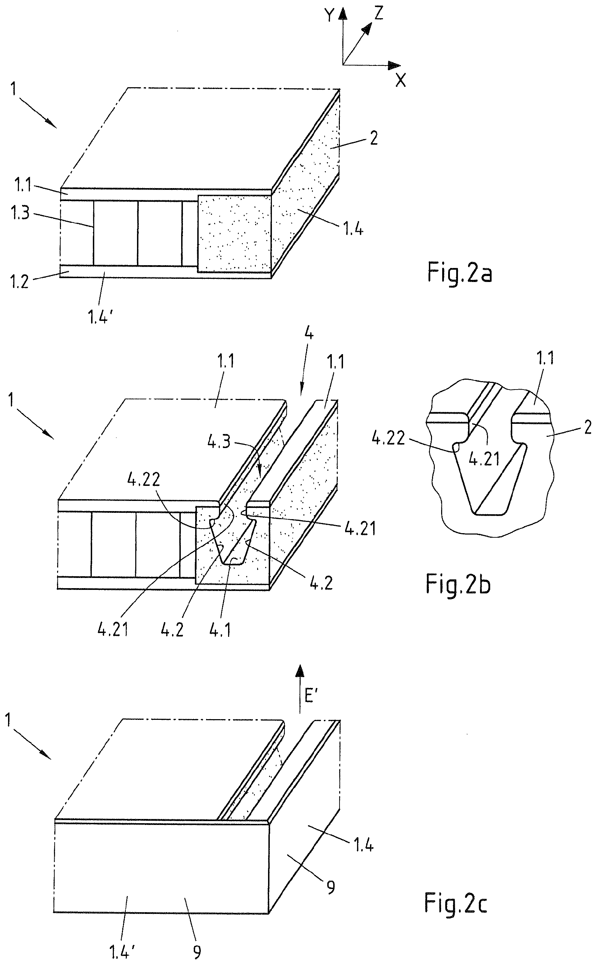

Eine andere Leichtbauplatte 1 mit einem zu dem anhand der Figuren 1a) bis e) definierten Federprofil 3 korrespondierenden Nutprofil 4 zeigen die Figuren 2a) bis c). Auch hier sind die einzelnen Herstellungsschritte des Profils 4 schematisch dargestellt.

Zunächst wird eine Leichtbauplatte 1 ebenfalls mit einer oberen Decklage 1.1, einer unteren Decklage 1.2 und einer Mittellage 1.3 bereitgestellt, wobei die Leichtbauplatte 1 bereits einen Riegel 2 aus einem Holzwerkstoff aufweist. Der Riegel ist fest mit den beiden Decklagen 1.1 und 1.2 verklebt.

Auch bei dieser Leichtbauplatte 1 ist als obere und untere Decklage 1.1 bzw. 1.2 jeweils eine Holzwerkstoffplatte und als Mittellage 1.3 eine Kartonwabenstruktur vorgesehen.

Fig. 2b) zeigt, auch in einer vergrößerten Detailansicht, die Leichtbauplatte 1, nachdem das Nutprofil 4 eingebracht worden ist, was beispielsweise durch Fräsen erfolgt ist. Das Nutprofil 4 erstreckt sich bevorzugt über die gesamte Erstreckung der parallelen Seitenkante 1.4 der Leichtbauplatte 1, wobei, was Fig. 2c) zeigt, etwaig entstehende Durchbrechungen an den Schmalseiten 1.4' erfindungsgemäß durch nachträgliches Bekanten (Aufbringen einer Abdeckung 10 und ggf. einer Beschichtung 9, beispielsweise einer Melaminkante aus einem Schichtstoff oder einer Kunststoffkante) verdeckt werden können.

Das in Fig. 2b) dargestellte Nutprofil 4 weist einen Nutgrund 4.1 und zwei sich gegenüberliegende Nutwände 4.2 auf, die sich vom Nutgrund 4.1 zu einer gegenüberliegenden Nutöffnung 4.3 erstrecken. Da sich das Nutprofil 4 bis durch die obere Decklage 1.1 hindurch erstreckt und auch über die gesamte Breite der Leichtbauplatte 1 verläuft, ist die obere Decklage 1.1 in diesem Fall zweigeteilt; sie besteht also nach dem Einbringen/Einfräsen des Nutprofils 4 aus zwei Teilplatten.

Beide Nutwände 4.2 erweitern sich vom Nutgrund 4.1 in Richtung der Nutöffnung 4.3 gleichmäßig bis zu einem zum Nutinnern vorspringenden Abschnitt 4.21, der einen Anschlag 4.22 in Richtung vom Nutgrund 4.1 zur Nutöffnung 4.3 für eine mechanische Verriegelung bildet. Dabei ist der Verlauf der Nutwände 4.2 zu einer in senkrechter Richtung Y verlaufenden gedachten Ebene spiegelsymmetrisch, wobei das Profil 4 einen in Richtung Z quer zur Längsrichtung X gleichmäßigen Querschnitt hat.

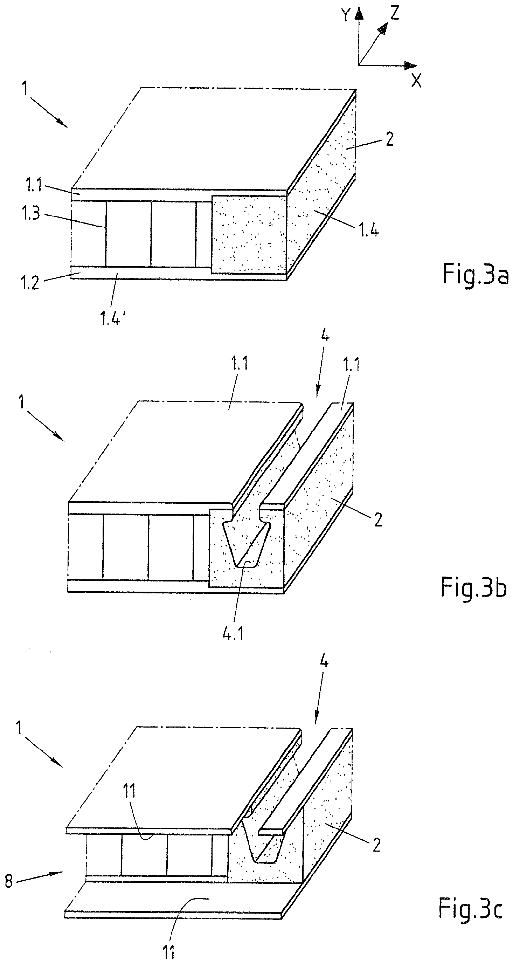

In den Figuren 3a) bis e) ist anhand eines weiteren Ausführungsbeispiels schematisch dargestellt, wie ein Nutprofil 4 in einer Leichtbauplatte 1 vorgesehen werden kann. Die Ansicht in Fig. 3a) entspricht der Ansicht in Fig. 2a). Auch hier wird zunächst eine Leichtbauplatte 1 mit einer oberen Decklage 1.1, einer unteren Decklage 1.2 und einer Mittellage 1.3 bereitgestellt, wobei die Leichtbauplatte 1 bereits einen Riegel aus einem Holzwerkstoff aufweist.

Fig. 3b) zeigt eine mit Fig. 2b) vergleichbare Ansicht, wobei auch hier ein Nutprofil 4 im Riegel 2 vorgesehen wird, das sich bis durch die obere Decklage 1.1 hindurch erstreckt und auch über die gesamte Breite der Leichtbauplatte 1 verläuft. Das Nutprofil weist in diesem Ausführungsbeispiel (im Querschnitt) dieselbe Form wie bei dem Ausführungsbeispiel in Fig. 2b) auf.

Im Unterschied zu dem Ausführungsbeispiel in den Figuren 2a) bis c) werden die Schmalseiten 1.4 und 1.4' hier nicht direkt bekantet, sondern es wird zunächst, wie Fig. 3c) zeigt, eine weitere Aussparung 8 zwischen den Decklagen vorgesehen, die sich quer zu dem bereits eingesetzten Riegel 2 mit dem Nutprofil 4 erstreckt. Mit anderen Worten verläuft die Aussparung 8 an einer Schmalseite 1.4' der Leichtbauplatte 1, die sich quer (orthogonal) zu der Schmalseite 1.4 der Leichtbauplatte 1 erstreckt, an der der Riegel 2 mit dem Nutprofil 4 eingesetzt ist. Die besagte Aussparung 8 weist, wie dies auch anhand von Fig. 1b) beschrieben worden ist, jeweils eine Ausnehmung 11 in den Decklagen 1.1 und 1.2auf.

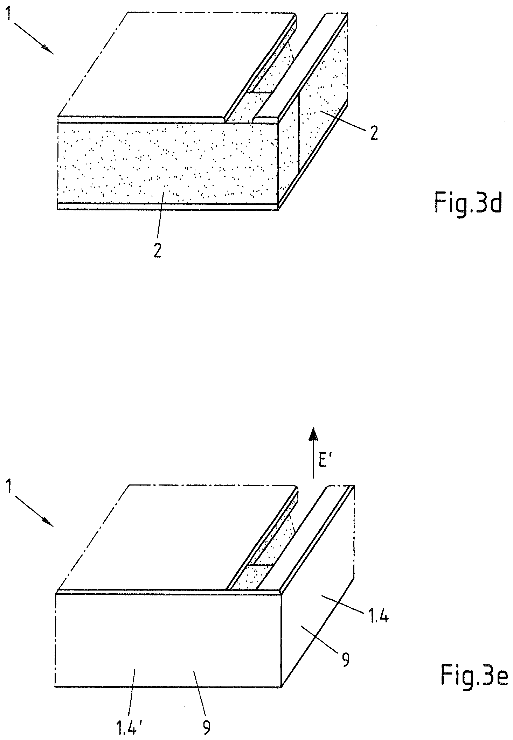

In die Aussparung 8 wird, wie dies Fig. 3d) zeigt, anschließend ein weiterer Riegel 2 eingesetzt, der quer zu dem zuerst eingesetzten Riegel 2 mit dem Nutprofil 4 verläuft. Der weitere Riegel 2, der kein Profil aufweist, verdeckt die Durchbrechung, die in dem das Nutprofil 4 aufweisenden Riegel 2 am stirnseitigen Ende vorgesehen ist und von der Nut gebildet wird. Mit anderen Worten bildet der weitere Riegel 2 eine Abdeckung des stirnseitigen Endes des das Nutprofil 4 aufweisenden Riegels 2 in Richtung der Schmalseite 1.4' der Leichtbauplatte 1. Wie Fig. 3d) zeigt, ist damit der Kantenbereich der Leichtbauplatten, das heißt die Schmalseiten 1.4 bzw. 1.4', nahezu vollständig geschlossen. Einzig ein kleiner Spalt im Bereich der oberen Decklage, der von der ursprünglichen Nut 4 herrührt, ist noch zur Seite hin offen. Aber auch dieser kleine Spalt ist zur Schmalseite 1.4' hin durch das abschließende Bekanten der Leichtbauplatte 1 ohne weiteres abdeckbar (Fig. 3e).

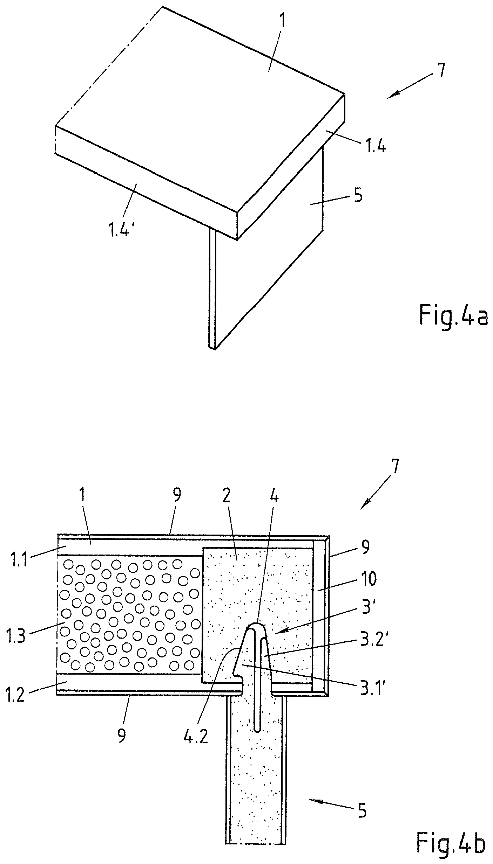

Fig. 4a) zeigt eine perspektivische Ansicht einer Verbindungsanordnung 7, die hier Bestandteil eines Tisches ist. Fig. 4b) zeigt eine entsprechende Schnittansicht.

Bei der in den Figuren 4a) und b) dargestellten Verbindungsanordnung 7 weist die Leichtbauplatte 1 Decklagen 1.1 und 1.2 aus einem Holzwerkstoff auf, wobei im Unterschied zu den vorangehend beschriebenen Ausführungsbeispielen die Mittellage 1.3 hier aus einem expandierten Kunststoff besteht, beispielsweise aus einem expandierten Polystyrol.

Auch hier ist die Leichtbauplatte 1 an den Schmalseiten 1.4 und 1.4' bekantet, nämlich mit einer Abdeckung 10 in Form einer Kunststoffleiste. Darüber hinaus ist die Leichtbauplatte 1 ferner noch mit einer Beschichtung 9 in Form einer Dekorfolie versehen.

Wie Fig. 4b) zeigt, ist das Nutprofil 4 im Riegel 2 in diesem Fall nicht symmetrisch, sondern weist nur eine Nutwand 4.2 mit einem Anschlag für ein korrespondierendes Profil 3' eines weiteren Bauteils 5 auf.

Bei dem weiteren Bauteil 5 handelt es sich um eine vergleichsweise dünne Holzwerkstoffplatte, beispielsweise eine Span- oder Faserplatte, die ebenfalls beschichtet ist. Entsprechend der Form des Nutprofils 4 ist auch das Federprofil 3' des weiteren Bauteils 5 nicht symmetrisch, sondern weist nur einen einzigen hakenförmigen Vorsprung 3.1' auf. Der davon beabstandete weitere Vorsprung 3.2' weist keinen Haken auf. Eine solche Verbindungsanordnung 7 läßt sich durch eine Kombination von Einwinkeln und Verschnappen herstellen.

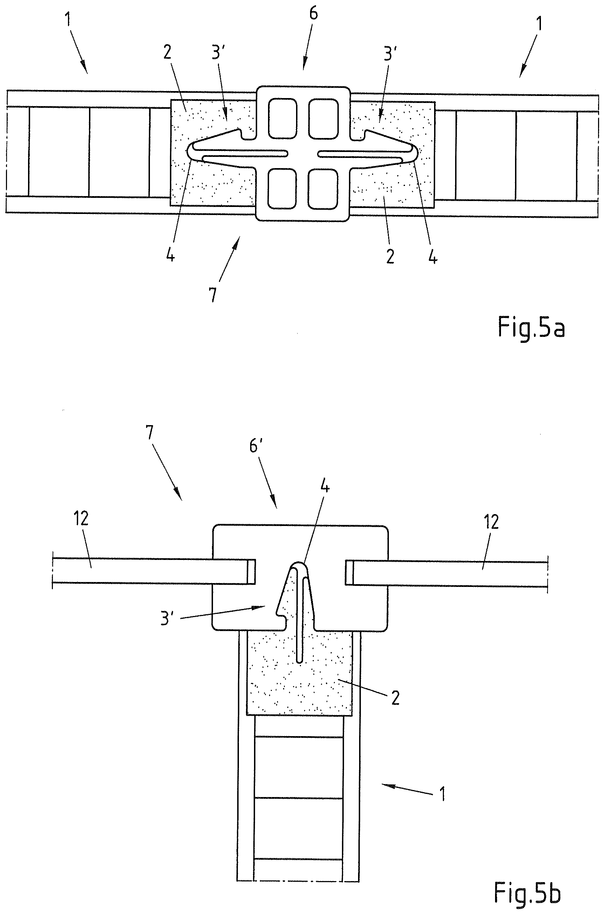

Die Figuren 5a) und b) zeigen schließlich eine Verbindungsanordnung 7, bei der eine Leichtbauplatte 1 mit einem ein Nutprofil 4 aufweisenden Riegel 2 ebenfalls mit einem weiteren Bauteil 6 bzw. 6' verbunden ist, wobei es sich hier bei dem weiteren Bauteil um eine Verbindungsleiste handelt. Im Falle der Fig. 5a) handelt es sich bei der Verbindungsleiste 6 um ein extrudiertes Profil aus WPC (Wood Plastic Compound), im Falle der Fig. 5b) um eine Verbindungsleiste 6' aus Holz.

Wie die Figuren 5a) und b) zeigen, kann bei der erfindungsgemäßen Verbindungsanordnung 7 das weitere Bauteil auch ein anderes Element als eine weitere Platte sein. Dieses weitere Element, hier eine Verbindungsleiste 6 bzw. 6' kann dann dazu dienen, noch andere Bauteile mit der Leichtbauplatte 1 zu verbinden. Im Falle der Fig. 5a) werden beispielsweise zwei Leichtbauplatten 1 desselben Typs über die Verbindungsleiste 6 miteinander verbunden, und zwar ebenfalls durch eine Kombination aus Einwinkeln und Verschnappen. Im Falle der Fig. 5b) wird die Leichtbauplatte 1, die hier das Mittelhaupt eines Möbels bildet, mit zwei im Vergleich zur Leichtbauplatte 1 relativ dünnen Rückwänden 12 verbunden. Auch dies erfolgt durch eine Kombination von Einwinkeln und Verschnappen.

## Patentansprüche

1. Leichtbauplatte (1)
- mit einer sich in einer Längsrichtung (X) erstreckenden oberen Decklage (1.1),
- mit einer sich parallel zur oberen Decklage (1.1) erstreckenden unteren Decklage (1.2), die in einer Richtung (Y) senkrecht zur Längsrichtung (X) von der oberen Decklage (1.1) beabstandet ist,
- mit einer sich zwischen der oberen Decklage (1.1) und der unteren Decklage (1.2) erstreckenden leichten Mittellage (1.3) und
- mit einem separaten sich zwischen der oberen Decklage (1.1) und der unteren Decklage (1.2) erstreckenden Riegel (2) aus Holz oder Holzwerkstoff, wobei der Riegel (2) mit beiden Decklagen (1.1,1.2) verbunden ist und ein herausgearbeitetes Nutprofil (4) aufweist, das zur mechanischen Verriegelung in einer Richtung (Y) senkrecht zur Längsrichtung (X) mit einem korrespondierenden Profil (3') eines weiteren Bauteils (1,5,6,6') ausgebildet ist,
**dadurch gekennzeichnet, dass** das Nutprofil (4) ferner zur mechanischen Verriegelung in Längsrichtung (X) mit einem korrespondierenden Profil (3') eines weiteren Bauteils (1,5,6,6') ausgebildet ist.

2. Leichtbauplatte (1), insbesondere Leichtbauplatte (1) nach Anspruch 1,
- mit einer sich in einer Längsrichtung (X) erstreckenden oberen Decklage (1.1),
- mit einer sich parallel zur oberen Decklage (1.1) erstreckenden unteren Decklage (1.2), die in einer Richtung (Y) senkrecht zur Längsrichtung (X) von der oberen Decklage (1.1) beabstandet ist,
- mit einer sich zwischen der oberen Decklage (1.1) und der unteren Decklage (1.2) erstreckenden leichten Mittellage (1.3) und
- mit einem separaten sich zwischen der oberen Decklage (1.1) und der unteren Decklage (1.2) erstreckenden Riegel (2) aus Holz oder Holzwerkstoff, wobei der Riegel (2) mit beiden Decklagen (1.1,1.2) verbunden ist,
**dadurch gekennzeichnet, dass** der Riegel (2) ein herausgearbeitetes Federprofil (3) aufweist, das zur mechanischen Verriegelung in Längsrichtung (X) und in einer Richtung (Y) senkrecht zur Längsrichtung (X) mit einem korrespondierenden Profil (3') eines weiteren Bauteils (1,5,6,6') ausgebildet ist.

3. Leichtbauplatte (1) nach Anspruch 1 oder 2, **dadurch gekennzeichnet, dass** das Federprofil (3) einen ersten sich abschnittsweise erweiternden Vorsprung (3.1) aufweist, wobei das Federprofil (3) insbesondere einen weiteren Vorsprung (3.2) aufweist, der sich benachbart zu dem ersten Vorsprung (3.1) erstreckt, wobei ein Spalt (3.3) zwischen dem weitere Vorsprung (3.2) und dem ersten Vorsprung (3.1) ausgebildet ist, wobei der weitere Vorsprung (3.2) insbesondere ebenfalls sich abschnittsweise erweiternd ausgebildet ist und vorzugsweise eine Form hat, die spiegelsymmetrisch zu der Form des ersten Vorsprungs (3.1) ist.

4. Leichtbauplatte (1) nach Anspruch 2 oder 3, **dadurch gekennzeichnet, dass** sich der erste und/oder weitere Vorsprung (3.1,3.2) über eine die Schmalseite (1.4) oder die Oberseite (1.5) der Leichtbauplatte (1) bildende ebene Fläche hinaus in eine Erstreckungsrichtung (E,E') erstreckt, wobei insbesondere die schmalseitigen Kanten (1.11,1.21) der oberen Decklage (1.1) und/oder unteren Decklage (1.2) bündig zu der ebenen Fläche (1.4,1.5) verlaufen oder Teil des Vorsprungs (3.1,3.2) sind.

5. Leichtbauplatte (1) nach einem der vorangehenden Ansprüche, **dadurch gekennzeichnet, dass** das Nutprofil (4) einen Nutgrund (4.1) und zwei sich gegenüberliegende Nutwände (4.2), die sich vom Nutgrund (4.1) zu einer Nutöffnung (4.3) erstrecken, aufweist, wobei mindestens eine der Nutwände (4.2) einen zum Nutinnern vorspringenden Abschnitt (4.21) hat, der einen Anschlag (4.22) in Richtung vom Nutgrund (4.1) zur Nutöffnung (4.3) bildet, wobei insbesondere die Nutöffnung (4.3) innerhalb der oberen Decklage (1.1) oder zwischen der oberen Decklage (1.1) und der unteren Decklage (1.2) liegt, wobei insbesondere der Verlauf der Nutwände (4.2) spiegelsymmetrisch ist.

6. Leichtbauplatte (1) nach einem der vorangehenden Ansprüche, **dadurch gekennzeichnet, dass** das Federprofil (3) und/oder Nutprofil (4) einen in Richtung (Z) quer zur Längsrichtung (X) gleichmäßigen Querschnitt hat.

7. Leichtbauplatte (1) nach einem der vorangehenden Ansprüche, **dadurch gekennzeichnet, dass** sich das Federprofil (3) und/oder Nutprofil (4) über die gesamte Länge des Riegels (2) von einem ersten stirnseitigen Ende zu einem zweiten stirnseitigen Ende des Riegels (2) erstreckt, wobei insbesondere das erste und/oder zweite stirnseitige Ende des Riegels (2) von einem zu dem Riegel (2) quer verlaufenden weiteren Riegel (2), der sich ebenfalls zwischen der oberen Decklage (1.1) und der unteren Decklage (1.2) erstreckt, abgedeckt ist.

8. Leichtbauplatte (1) nach einem der vorangehenden Ansprüche, **dadurch gekennzeichnet, dass** der Riegel (2) die obere Decklage (1.1) und/oder untere Decklage (1.2) berührt, wobei insbesondere der Abstand zwischen oberer Decklage (1.1) und unterer Decklage (1.2) in dem Bereich, in dem der Riegel (2) die jeweilige Decklage (1.1,1.2) berührt, größer als in einem anderen Bereich ist.

9. Verbindungsanordnung (7)
- mit einer Leichtbauplatte (1) nach einem der vorangehenden Ansprüche, und
- mit einem weiteren Bauteil (1,5,6,6'), das ein zu dem im Riegel (2) der Leichtbauplatte (1) vorgesehenen Profil (3,4) korrespondierendes Profil (3') aufweist,
wobei das weitere Bauteil (1,5,6,6') mit der Leichtbauplatte (1) so über die Profile (3,4,3') verbunden ist, dass eine mechanische Verriegelung in Längsrichtung (X) und in der Richtung (Y) senkrecht zur Längsrichtung (X) besteht.

10. Verfahren zum Herstellen einer Verbindungsanordnung (7) nach Anspruch 9, bei dem die folgenden Schritte durchgeführt werden:
- Bereitstellen einer Leichtbauplatte (1) mit einer sich in einer Längsrichtung (X) erstreckenden oberen Decklage (1.1), mit einer sich parallel zur oberen Decklage (1.1) erstreckenden unteren Decklage (1.2), die in einer Richtung (Y) senkrecht zur Längsrichtung (X) von der oberen Decklage (1.1) beabstandet ist, mit einer sich zwischen der oberen Decklage (1.1) und der unteren Decklage (1.2) erstreckenden leichten Mittellage (1.3) und mit einem sich zwischen der oberen Decklage (1.1) und der unteren Decklage (1.2) erstreckenden Riegel (2) aus Holz oder Holzwerkstoff,
- Herausarbeiten eines Federprofils (3) und/oder Nutprofils (4) aus dem Riegel (2) mit einem spanabhebenden Werkzeug und
- Verbinden der Leichtbauplatte (1) mit einem weiteren Bauteil (1,5,6,6'), das ein zu dem im Riegel (2) der Leichtbauplatte (1) vorgesehenen Profil (3,4) korrespondierendes Profil (3') aufweist, wobei das weitere Bauteil (1,5,6,6') mit der Leichtbauplatte (1) so über die Profile (3,4,3') verbunden wird, dass eine mechanische Verriegelung in Längsrichtung (X) und in der Richtung (Y) senkrecht zur Längsrichtung (X) besteht.

11. Verfahren nach Anspruch 10, **dadurch gekennzeichnet, dass** beim Schritt des Bereitstellens der Leichtbauplatte (1) zunächst eine Leichtbauplatte (1) mit einer sich in einer Längsrichtung (X) erstreckenden oberen Decklage (1.1), mit einer sich parallel zur oberen Decklage (1.1) erstreckenden unteren Decklage (1.2), die in einer Richtung (Y) senkrecht zur Längsrichtung (X) von der oberen Decklage (1.1) beabstandet ist, und mit einer sich zwischen der oberen Decklage (1.1) und der unteren Decklage (1.2) erstreckenden leichten Mittellage (1.3) bereitgestellt wird, dann zwischen den Decklagen (1.1,1.2) eine Aussparung (8) in der Leichtbauplatte (1) vorgesehen wird und dann in die Aussparung (8) der Riegel (2) eingesetzt wird, wobei im Anschluss daran der Schritt des Herausarbeitens des Federprofils (3) und/oder Nutprofils (4) aus dem Riegel (2) erfolgt.

12. Verfahren nach Anspruch 10 oder 11, **dadurch gekennzeichnet, dass** beim Schritt des Herausarbeitens des Federprofils (3) und/oder Nutprofils (4) aus dem Riegel (2) das spanabhebende Werkzeug auch die obere Decklage (1.1) und/oder untere Decklage (1.2) formt.

13. Verfahren nach einem der Ansprüche 10 bis 12, **dadurch gekennzeichnet, dass** das Federprofil (3) und/oder Nutprofil (4) über die gesamte Länge des Riegels (2) von einem ersten stirnseitigen Ende zu einem zweiten stirnseitigen Ende des Riegels (2) vorgesehen wird.

14. Verfahren nach Anspruch 13, **dadurch gekennzeichnet, dass** nach dem Schritt des Herausarbeitens des Nutprofils (4) aus dem Riegel (2) zwischen den Decklagen (1.1,1.2) eine quer zu dem Riegel (2) verlaufende Aussparung (8) in der Leichtbauplatte (1) vorgesehen wird und dann in die Aussparung (8) ein quer zu dem Riegel (2) verlaufender weiterer Riegel (2) so eingesetzt wird, dass der weitere Riegel (2) eines der stirnseitigen Enden des das Nutprofil (4) aufweisenden Riegels (2) abdeckt.

15. Verfahren nach einem der Ansprüche 10 bis 14, **dadurch gekennzeichnet, dass** mindestens eine Schmalseite (1.4,1.4'), vorzugsweise alle Schmalseiten (1.4,1.4'), der Leichtbauplatte (1) nach dem Schritt des Herausarbeitens eines Federprofils (3) und/oder Nutprofils (4) aus dem Riegel (2) bekantet und/oder mit einer Beschichtung (9) versehen wird/werden.

## Claims

1. A lightweight board (1)
- with an upper cover layer (1.1) extending in a longitudinal direction (X),
- with a lower cover layer (1.2) extending parallel to the upper cover layer (1.1), said lower cover layer being spaced apart from the upper cover layer (1.1) in a direction (Y) normal to the longitudinal direction (X),
- with a light middle layer (1.3) extending between the upper cover layer (1.1) and the lower cover layer (1.2) and
- with a separate bar (2), made of wood or wood-based material, extending between the upper cover layer (1.1) and the lower cover layer (1.2), wherein the bar (2) is connected to the two cover layers (1.1, 1.2) and comprises a machine-worked groove profile (4), which is constituted for mechanical locking in a direction (Y) normal to the longitudinal direction (X) with a corresponding profile (3') of a further component (1, 5, 6, 6'),
**characterised in that** the groove profile (4) is further constituted for mechanical locking in the longitudinal direction (X) with a corresponding profile (3') of a further component (1, 5, 6, 6').

2. A lightweight board (1), in particular lightweight board (1) according to claim 1,
- with an upper cover layer (1.1) extending in a longitudinal direction (X),
- with a lower cover layer (1.2) extending parallel to the upper cover layer (1.1), said lower cover layer being spaced apart from the upper cover layer (1.1) in a direction (Y) normal to the longitudinal direction (X),
- with a light middle layer (1.3) extending between the upper cover layer (1.1) and the lower cover layer (1.2) and
- with a separate bar (2), made of wood or wood-based material, extending between the upper cover layer (1.1) and the lower cover layer (1.2), wherein the bar (2) is connected to the two cover layers (1.1, 1.2),
**characterised in that** the bar (2) comprises a machine-worked tongue profile (3), which is constituted for mechanical locking in longitudinal direction (X) and in a direction (Y) normal to the longitudinal direction (X) with a corresponding profile (3') of a further component (1, 5, 6, 6').

3. The lightweight board (1) according to claim 1 or 2, **characterised in that** the spring profile (3) comprises a first projection (3.1) widening in sections, wherein the spring profile (3) comprises in particular a further projection (3.2), which extends adjacent to the first projection (3.1), wherein a gap (3.3) is constituted between the further projection (3.2) and the first projection (3.1), wherein the further projection (3.2) is in particular also constituted widening in sections and preferably has a shape which is mirror-symmetrical with the shape of the first projection (3.1).

4. The lightweight board (1) according to claim 2 or 3, **characterised in that** the first and/or further projection (3.1, 3.2) extends in an extension direction (E, E') beyond a plane face forming the narrow side (1.4) or the upper side (1.5) of the lightweight board (1), wherein in particular the narrow-side edges (1.11, 1.21) of the upper cover layer (1.1) and/or lower cover layer (1.2) run flush with the plane face (1.4, 1.5) or are part of the projection (3.1, 3.2).

5. The lightweight board (1) according to any one of the preceding claims, **characterised in that** the groove profile (4) comprises a groove base (4.1) and two opposite-lying groove walls (4.2), which extend from the groove base (4.1) to a groove opening (4.3), wherein at least one of the groove walls (4.2) has a section (4.21) which projects towards the groove interior and which forms a stop (4.22) in the direction from the groove base (4.1) to the groove opening (4.3), wherein in particular the groove opening (4.3) lies inside the upper cover layer (1.1) or between the upper cover layer (1.1) and the lower cover layer (1.2), wherein in particular the course of the groove walls (4.2) is mirror-symmetrical.

6. The lightweight board (1) according to any one of the preceding claims, **characterised in that** the spring profile (3) and/or groove profile (4) has a uniform cross-section in direction (Z) normal to the longitudinal direction (X).

7. The lightweight board (1) according to any one of the preceding claims, **characterised in that** the spring profile (3) and/or groove profile (4) extends over the entire length of the bar (2) from a first frontal end to a second frontal end of the bar (2), wherein in particular the first and/or second frontal end of the bar (2) is covered by a further bar (2) running normal to said bar (2), which further bar also extends between the upper cover layer (1.1) and the lower cover layer (1.2).

8. The lightweight board (1) according to any one of the preceding claims, **characterised in that** the bar (2) touches the upper cover layer (1.1) and/or lower cover layer (1.2), wherein in particular the distance between upper cover layer (1.1) and lower cover layer (1.2) in the region in which the bar (2) touches the respective cover layer (1.1, 1.2) is greater than in another region.

9. A connection arrangement (7)
- with a lightweight board (1) according to any one of the preceding claims, and
- with a further component (1, 5, 6, 6'), which has a profile (3') corresponding to the profile (3, 4) provided in the bar (2) of the lightweight board (1),
wherein the further component (1, 5, 6, 6') is connected to the lightweight board (1) by means of the profiles (3, 4, 3') in such a way that a mechanical locking exists in the longitudinal direction (X) and in the direction (Y) normal to the longitudinal direction (X).

10. A method for producing a connection arrangement (7) according to claim 9, wherein the following steps are carried out:
- providing a lightweight board (1) with an upper cover layer (1.1) extending in a longitudinal direction (X), with a lower cover layer (1.2) extending parallel to the upper cover layer (1.1), said lower cover layer being spaced apart from the upper cover layer (1.1) in a direction (Y) normal to the longitudinal direction (X), with a light middle layer (1.3) extending between the upper cover layer (1.1) and the lower cover layer (1.2) and with a bar (2), made of wood or wood-based material, extending between the upper cover layer (1.1) and the lower cover layer (1.2),
- machine-working a spring profile (3) and/or groove profile (4) from the bar (2) with a cutting tool and
- connecting the lightweight board (1) to a further component (1, 5, 6, 6'), which has a profile (3') corresponding to the profile (3, 4) provided in the bar (2) of the lightweight board (1), wherein the further component (1, 5, 6, 6') is connected to the lightweight board (1) by means of the profiles (3, 4, 3') in such a way that a mechanical locking exists in the longitudinal direction (X) and in the direction (Y) normal to the longitudinal direction (X).

11. The method according to claim 10, **characterised in that**, in the step of providing the lightweight board (1), a lightweight board (1) with an upper cover layer (1.1) extending in a longitudinal direction (X), with a lower cover layer (1.2) extending parallel to the upper cover layer (1.1), said lower cover layer being spaced apart from the upper cover layer (1.1) in a direction (Y) normal to the longitudinal direction (X), and with a light middle layer (1.3) extending between the upper cover layer (1.1) and the lower cover layer (1.2) is first provided, a recess (8) is then provided in the lightweight board (1) between the cover layers (1.1, 1.2) and the bar (2) is then inserted into the recess (8), wherein the step of machine-working the spring profile (3) and/or groove profile (4) out of the bar (2) then takes place.

12. The method according to claim 10 or 11, **characterised in that**, in the step of machine-working the spring profile (3) and/or groove profile (4) out of the bar (2), the cutting tool also forms the upper cover layer (1.1) and/or the lower cover layer (1.2).

13. The method according to any one of claims 10 to 12, **characterised in that** the spring profile (3) and/or groove profile (4) is provided over the entire length of the bar (2) from a first frontal end to a second frontal end of the bar (2).

14. The method according to claim 13, **characterised in that**, after the step of machine-working the groove profile (4) out of the bar (2) between the cover layers (1.1, 1.2), a recess (8) running normal to the bar (2) is provided in the lightweight board (1) and a further bar (2) running normal to said bar (2) is then inserted into the recess (8) in such a way that the further bar (2) covers one of the frontal ends of the bar (2) comprising the groove profile (4).

15. The method according to any one of claims 10 to 14, **characterised in that** at least one narrow side (1.4, 1.4'), preferably all the narrow sides (1.4, 1.4'), of the lightweight board (1) is/are edged after the step of machine-working a spring profile (3) and/or groove profile (4) out of the bar (2) and/or provided with a coating (9).

## Revendications

1. Panneau léger (1)
- avec une couche de couverture (1.1) supérieure s'étendant dans une direction longitudinale (X),
- avec une couche de couverture (1.2) inférieure s'étendant à la parallèle de la couche de couverture (1.1) supérieure qui dans une direction (Y) perpendiculaire à la direction longitudinale (X) est écartée de la couche de couverture (1.1) supérieure,
- avec une couche centrale (1.3) légère s'étendant entre la couche de couverture (1.1) supérieure et la couche de couverture (1.2) inférieure et
- avec une traverse (2) séparée en bois ou en matière à base de bois s'étendant entre la couche de couverture (1.1) supérieure et la couche de couverture (1.2) inférieure, la traverse (2) étant reliée avec les deux couches de couverture (1.1, 1.2) et comportant un profilé à rainure (4) ébauché dans la masse qui, pour le verrouillage mécanique dans une direction (Y) perpendiculaire à la direction longitudinale (X), est conçu avec un profilé (3') correspondant d'un composant supplémentaire (1, 5, 6, 6'),
**caractérisé en ce que** par ailleurs, pour le verrouillage mécanique dans la direction longitudinale (X), le profilé à rainure (4) est conçu avec un profilé correspondant (3') d'un composant supplémentaire (1, 5, 6, 6').

2. Panneau léger (1), notamment panneau léger (1) selon la revendication 1,
- avec une couche de couverture (1.1) supérieure s'étendant dans une direction longitudinale (X),
- avec une couche de couverture (1.2) inférieure s'étendant à la parallèle de la couche de couverture (1.1) supérieure, qui dans une direction (Y) perpendiculaire à la direction longitudinale (X) est écartée de la couche de couverture (1.1) supérieure,
- avec une couche centrale (1.3) légère s'étendant entre la couche de couverture (1.1) supérieure et la couche de couverture (1.2) inférieure et
- avec une traverse (2) séparée en bois ou en matière à base de bois s'étendant entre la couche de couverture (1.1) supérieure et la couche de couverture (1.2) inférieure, la traverse (2) étant reliée avec les deux couches de couverture (1.1, 1.2),
**caractérisé en ce que** la traverse (2) comporte un profilé à languette (3) ébauché dans la masse qui, pour le verrouillage mécanique dans la direction longitudinale (X) et dans une direction (Y) perpendiculaire à la direction longitudinale (X), est conçu avec un profilé correspondant (3') d'un composant supplémentaire (1, 5, 6, 6').

3. Panneau léger (1) selon la revendication 1 ou 2, **caractérisé en ce que** le profilé à languette (3) comporte une première saillie (3.1) s'élargissant par segments, le profilé à languette (3) comportant par ailleurs une saillie (3.2) supplémentaire qui s'étend au voisinage de la première saillie (3.1), un interstice (3.3) étant conçu entre la saillie (3.2) supplémentaire et la première saillie (3.1), la saillie (3.2) supplémentaire étant conçue notamment en s'élargissant également par segments et ayant de préférence une forme qui est en symétrie spéculaire de la forme de la première saillie (3.1).

4. Panneau léger (1) selon la revendication 2 ou 3, **caractérisé en ce que** la première saillie et/ou la saillie supplémentaire (3.1, 3.2) s'étend par-delà une surface plane formant le côté étroit (1.4) ou la face supérieure (1.5) du panneau léger (1) dans une direction d'extension (E, E'), notamment les arêtes (1.11, 1.21) du côté étroit de la couche de couverture (1.1) supérieure et/ou de la couche de couverture (1.2) inférieure s'écoulant à fleur de la surface plane (1.4, 1.5) ou étant une partie de la saillie (3.1, 3.2).

5. Panneau léger (1) selon l'une quelconque des revendications précédentes, **caractérisé en ce que** le profilé à rainure (4) comporte un fond de rainure (4.1) et deux parois de rainure (4.2) mutuellement opposées, qui à partir du fond de rainure (4.1) s'étendent en une ouverture de rainure (4.3), au moins l'une (4.2) des parois de rainure ayant un segment (4.21) saillant vers l'intérieur de la rainure qui forme une butée (4.22) dans la direction du fond de rainure (4.1) vers l'ouverture de rainure (4.3), notamment l'ouverture de rainure (4.3) se situant à l'intérieur de la couche de couverture (1.1) supérieure ou entre la couche de couverture (1.1) supérieure et la couche de couverture (1.2) inférieure, notamment le trajet des parois de rainure (4.2) étant en symétrie spéculaire.

6. Panneau léger (1) selon l'une quelconque des revendications précédentes, **caractérisé en ce que** le profilé à languette (3) et/ou le profilé à rainure (4) a une section transversale régulière dans la direction (Z) à la transversale de la direction longitudinale (X).

7. Panneau léger (1) selon l'une quelconque des revendications précédentes, **caractérisé en ce que** le profilé à languette (3) et/ou le profilé à rainure (4) s'étend sur toute la longueur de la traverse (2), d'une première extrémité frontale vers une deuxième extrémité frontale de la traverse (2), notamment la première et/ou la deuxième extrémité frontale de la traverse (2) étant recouverte par une traverse (2) supplémentaire s'écoulant à la transversale de la traverse (2), qui s'étend également entre la couche de couverture (1.1) supérieure et la couche de couverture (1.2) inférieure.

8. Panneau léger (1) selon l'une quelconque des revendications précédentes, **caractérisé en ce que** la traverse (2) touche la couche de couverture (1.1) supérieure et/ou la couche de couverture (1.2) inférieure, dans la zone dans laquelle la traverse (2) touche la couche de couverture (1.1, 1.2) concernée, notamment l'écart entre la couche de couverture (1.1) supérieure et la couche de couverture (1.2) inférieure étant plus grand que dans une autre zone.

9. Configuration d'assemblage (7),
- avec un panneau léger (1) selon l'une quelconque des revendications précédentes et
- avec un composant supplémentaire (1, 5, 6, 6') qui comporte un profilé (3') correspondant au profilé (3, 4) prévu dans la traverse (2) du panneau léger (1),
le composant supplémentaire (1, 5, 6', 6') étant assemblé avec le panneau léger (1) par l'intermédiaire des profilés (3, 4, 3') de telle sorte qu'un verrouillage mécanique soit donné dans la direction longitudinale (X) et dans la direction (Y) perpendiculaire à la direction longitudinale (X).

10. Procédé destiné à fabriquer une configuration d'assemblage (7) selon la revendication 9, lors duquel on réalise les étapes suivantes :
- la mise à disposition d'un panneau léger (1) avec une couche de couverture (1.1) supérieure s'étendant dans une direction longitudinale (X), avec une couche de couverture (1.2) inférieure s'étendant à la parallèle de la couche de couverture (1.1) supérieure qui dans une direction (Y) perpendiculaire à la direction longitudinale (X) est écartée de la couche de couverture (1.1) supérieure, avec une couche centrale (1.3) légère s'étendant entre la couche de couverture (1.1) supérieure et la couche de couverture (1.2) inférieure et avec une traverse (2) en bois ou en matière à base de bois s'étendant entre la couche de couverture (1.1) supérieure et la couche de couverture (1.2) inférieure,
- l'ébauchage dans la masse de la traverse (2) d'un profilé à languette (3) et/ou d'un profilé à rainure (4), à l'aide d'un outil d'enlèvement de copeaux,
- l'assemblage du panneau léger (1) avec un composant supplémentaire (1, 5, 6, 6') qui comporte un profilé (3') correspondant au profilé (3, 4) prévu dans la traverse (2) du panneau léger (1), sachant qu'on assemble le composant supplémentaire (1, 5, 6, 6') avec le panneau léger (1) par l'intermédiaire des profilés (3, 4, 3') de telle sorte qu'un verrouillage mécanique soit donné dans la direction longitudinale (X) et dans la direction (Y) perpendiculaire à la direction longitudinale (X).

11. Procédé selon la revendication 10, **caractérisé en ce que** lors de l'étape de la mise à disposition du panneau léger (1), on met d'abord à disposition un panneau léger (1) avec une couche de couverture (1.1) supérieure s'étendant dans une direction longitudinale (X), avec une couche de couverture (1.2) inférieure s'étendant à la parallèle de la couche de couverture (1.1) supérieure qui dans une direction (Y) perpendiculaire à la direction longitudinale (X) est écartée de la couche de couverture (1.1) supérieure, et avec une couche centrale (1.3) légère s'étendant entre la couche de couverture (1.1) supérieure et la couche de couverture (1.2) inférieure, ensuite on prévoit entre les couches de couverture (1.1, 1.2) un évidement (8) dans le panneau léger (1) et on insère ensuite la traverse (2) dans l'évidement (8), suite à quoi il s'effectue ensuite l'étape de l'ébauchage dans la masse de la traverse (2) du profilé à languette (3) et/ou du profilé à rainure (4).

12. Procédé selon la revendication 10 ou 11, **caractérisé en ce que** lors de l'étape de l'ébauchage dans la masse de la traverse (2) du profilé à languette (3) et/ou du profilé à rainure (4), l'outil d'enlèvement de copeaux façonne également la couche de couverture (1.1) supérieure et/ou la couche de couverture (1.2) inférieure.

13. Procédé selon l'une quelconque des revendications 10 à 12, **caractérisé en ce qu'**on prévoit le profilé à languette (3) et/ou le profilé à rainure (4) sur toute la longueur de la traverse (2), d'une première extrémité frontale vers une deuxième extrémité frontale de la traverse (2).

14. Procédé selon la revendication 13, **caractérisé en ce qu'**après l'étape de l'ébauchage du profilé à rainure (4) dans la masse de la traverse (2), on prévoit dans le panneau léger (1) entre les couches de couverture (1.1, 1.2) un évidement (8) s'écoulant à la transversale de la traverse (2) et on insère ensuite dans l'évidement (8) une traverse (2) supplémentaire s'écoulant à la transversale de la traverse (2), de telle sorte que la traverse (2) supplémentaire recouvre l'une des extrémités frontales de la traverse (2) comportant le profilé à rainure (4).

15. Procédé selon l'une quelconque des revendications 10 à 14, **caractérisé en ce qu'**après l'étape de l'ébauchage d'un profilé à languette (3) et/ou d'un profilé à rainure (4) dans la masse de la traverse (2), on plaque au moins un côté étroit (1.4, 1.4'), de préférence tous les côtés étroits (1.4, 1.4'), du panneau léger (1) et/ou on la/les munit d'un revêtement (9).
